# NOUVEAU FASCICULE DE BREVET EUROPEEN

(11) **EP 3 327 260 B2**
(45) Date de publication et mention de la décision concernant l'opposition: **11.06.2025**
(45) Mention de la délivrance du brevet: 08.07.2020
(21) Numéro de dépôt: 17203505.7
(22) Date de dépôt: 24.11.2017
(51) Int. Cl.: F01M 11/12, F16N 19/00, F01D 25/20

(54) **RÉSERVOIR D'HUILE COMPRENANT UN DISPOSITIF DE CONTRÔLE DU NIVEAU D'HUILE**
ÖLTANK, DER EINE VORRICHTUNG ZUR ÖLSTANDSKONTROLLE UMFASST
OIL TANK COMPRISING A DEVICE FOR CHECKING THE OIL LEVEL

(30) Priorité: 28.11.2016 FR 1661593
(43) Date de publication de la demande: 30.05.2018
(73) Titulaire: SAFRAN AIRCRAFT ENGINES, 75015 Paris (FR)
(72) Inventeur: CHALAUD, Sébastien, Christophe, 77550 Moissy-Cramayel (FR); DOMECQ, Lise, Jeanine, Léonie, 77550 Moissy-Cramayel (FR); EMPRIN, Yves, 77550 Moissy-Cramayel (FR)
(74) Mandataire: Ernest Gutmann - Yves Plasseraud S.A.S.

(56) Documents cités:
- EP-A1- 3 018 303
- FR-A1- 3 005 486
- US-A- 3 882 967
- US-A1- 2010 326 048
- US-A1- 2011 284 328
- US-B1- 7 216 473

## Description

### Description

La présente invention concerne un réservoir d'huile pour un moteur thermique, par exemple une turbomachine.

Comme tous les moteurs thermiques, les turbomachines comprennent des pièces en mouvement relatif les unes par rapport aux autres. Pour faciliter le fonctionnement de la turbomachine et éviter que les pièces ne se détériorent, notamment à cause des frottements entre elles, les pièces doivent être lubrifiées.

La lubrification est ordinairement faite au moyen d'une huile visqueuse qui recouvre les pièces et assure d'une part le glissement d'une pièce sur une autre et d'autre part le refroidissement, ou du moins le non échauffement, des pièces.

L'huile est contenue dans un réservoir intégré à un circuit d'huile en boucle fermée qui diffuse ou projette l'huile sur les pièces à lubrifier.

Il est important de connaître la quantité d'huile (on parle également de niveau d'huile) présente dans le réservoir et donc dans le circuit de lubrification.

En effet, un trop plein d'huile dans le circuit de lubrification peut générer une surpression d'huile dans la turbomachine, au risque de la dégrader. De même, un manque d'huile dans le circuit de lubrification peut entraîner un manque de lubrification des pièces ayant un mouvement relatif entre elles et causer un échauffement de ces pièces pouvant conduire à une rupture de ces pièces ou à une soudure (due à réchauffement) des pièces entre elles par fusion locale.

Pour connaître le niveau d'huile dans le réservoir, il est connu d'utiliser un dispositif de contrôle qui peut indiquer en temps réel la quantité d'huile.

Un tel dispositif de contrôle comprend notamment un flotteur flottant à la surface de l'huile et qui intègre un élément magnétique. Le flotteur se déplace le long d'une carte magnétique qui comprend des contacteurs qui réagissent avec l'élément magnétique du flotteur, cette carte étant reliée à un système qui convertit la réaction des contacteurs en informations compréhensibles par un mécanicien ou un pilote de l'avion par exemple. Ainsi, lorsque le niveau d'huile dans le réservoir évolue, le flotteur ouvre ou ferme des contacteurs et le pilote et/ou le mécanicien peu(ven)t connaître la quantité d'huile dans le circuit de lubrification.

Dans le cadre du développement de nouvelles turbomachines de dimensions réduites, les réservoirs d'huile présentent un rayon de courbure qui est de plus en plus faible.

De même, certaines modifications de l'architecture des turbomachines peuvent prévoir le déplacement des réservoirs d'huile dans une zone du moteur, par exemple une zone « core » dans laquelle l'espace est réduit, notamment le rayon de courbure, par rapport à l'emplacement initial des réservoirs d'huile. Il est alors nécessaire de modifier les réservoirs d'huile, notamment en réduisant leur rayon de courbure.

Ainsi, les dispositifs de contrôle qui sont généralement sensiblement rectilignes ou qui présentent une légère courbure ne peuvent pas être utilisés dans les réservoirs des nouvelles turbomachines ou dans les réservoirs modifiés. En effet, leur géométrie ne permet pas leur installation dans le réservoir ni leur démontage dans le faible espace autour du réservoir lorsque celui-ci est monté dans une turbomachine.

L'adaptation d'un dispositif de contrôle connu aux formes d'un réservoir ayant un faible rayon de courbure engendrerait un coût trop important et ne résoudrait par le problème de démontage précédemment évoqué.

L'invention a notamment pour but d'apporter une solution simple, efficace et économique à ce problème.

A cet effet, l'invention propose une turbomachine selon la revendication 1.

La présence de deux capteurs séparés permet, outre de pouvoir facilement les introduire tous les deux dans l'enceinte, de pouvoir ne contrôler que les portions supérieure et inférieure du réservoir dans lesquelles il existe des risques de trop plein ou, respectivement, de manque d'huile.

Selon un aspect, l'enceinte comprend une portion milieu séparant la portion inférieure de la portion supérieure, et dans lequel le premier capteur est positionné de sorte à couvrir la portion inférieure et une partie de la portion milieu, et le second capteur est positionné de sorte à couvrir la portion supérieure et une partie de la portion milieu.

Dans ce cas particulier, il est possible de connaître le niveau d'huile en tout point du réservoir. Ainsi, il est possible de réaliser un monitoring (expression anglaise signifiant une surveillance) de la consommation d'huile et définir si celle-ci est normale ou anormale.

Avantageusement, l'enceinte comprend un bouchon d'étanchéité permettant l'introduction ou le retrait du premier capteur.

Ce bouchon d'étanchéité permet notamment de faciliter les opérations de maintenance, puisque l'accès au premier capteur est direct, tout en limitant les fuites d'huile hors du réservoir.

Selon un aspect, le premier capteur est solidaire du bouchon d'étanchéité.

Cette particularité facilite encore les opérations de maintenance puisque, pour retirer le premier capteur du réservoir, il suffit simplement de retirer le bouchon étanche.

De préférence, le premier capteur et le second capteur sont rectilignes.

La forme rectiligne des capteurs permet de faciliter leur insertion et leur retrait puisque, contrairement à une forme courbée pour laquelle il faut qu'un périmètre autour du capteur soit dégagé, il suffit que l'espace au-dessus du capteur soit dégagé.

Avantageusement, la portion supérieure et la portion inférieure représentent chacune un tiers de la longueur courbe totale de l'enceinte.

Ces dimensions permettent d'utiliser des capteurs de petite taille notamment lorsque seuls le trop plein et le manque d'huile sont surveillés.

L'invention sera mieux comprise et d'autres détails, caractéristiques et avantages de l'invention apparaîtront à la lecture de la description suivante faite à titre d'exemple non limitatif en référence aux dessins annexés dans lesquels :
- la figure 1 est une vue en perspective d'une turbomachine comprenant un réservoir d'huile selon l'invention ;
- la figure 2 est une vue en coupe du réservoir de la figure 1 selon un premier mode de réalisation ;
- la figure 3 est une vue en coupe du réservoir de la figure 1 selon un second mode de réalisation ;
- la figure 4 est une vue de détail en coupe d'un bouchon étanche du réservoir d'huile des figures précédentes ;
- la figure 5 est une représentation schématique d'un capteur d'un dispositif de contrôle du niveau d'huile dans le réservoir des figures précédentes.

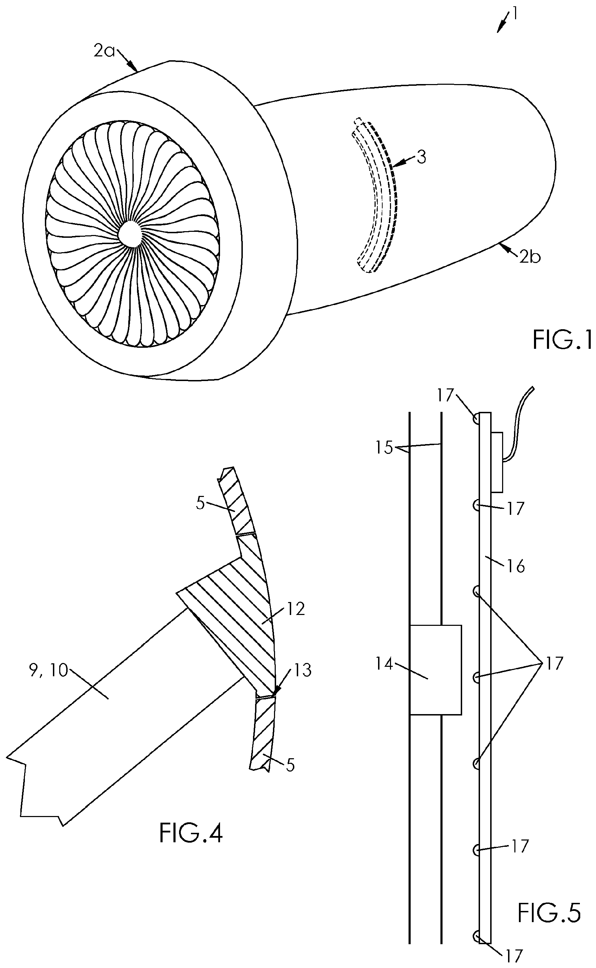

On a représenté, sur la figure 1, une turbomachine 1 comprenant un carter 2a fan et un carter 2b interne définissant un espace interne (également appelé zone « core ») dans lequel sont logés les équipements de la turbomachine 1 et notamment un réservoir 3 d'huile.

Le réservoir 3 est logé dans un espace délimité extérieurement par le carter 2b interne et intérieurement par d'autres éléments de la turbomachine (non représentés) comme par exemple un carter d'un compresseur basse pression. Ainsi, lorsque le réservoir 3 est installé dans la turbomachine 1, son rayon de courbure est important et son accès est restreint.

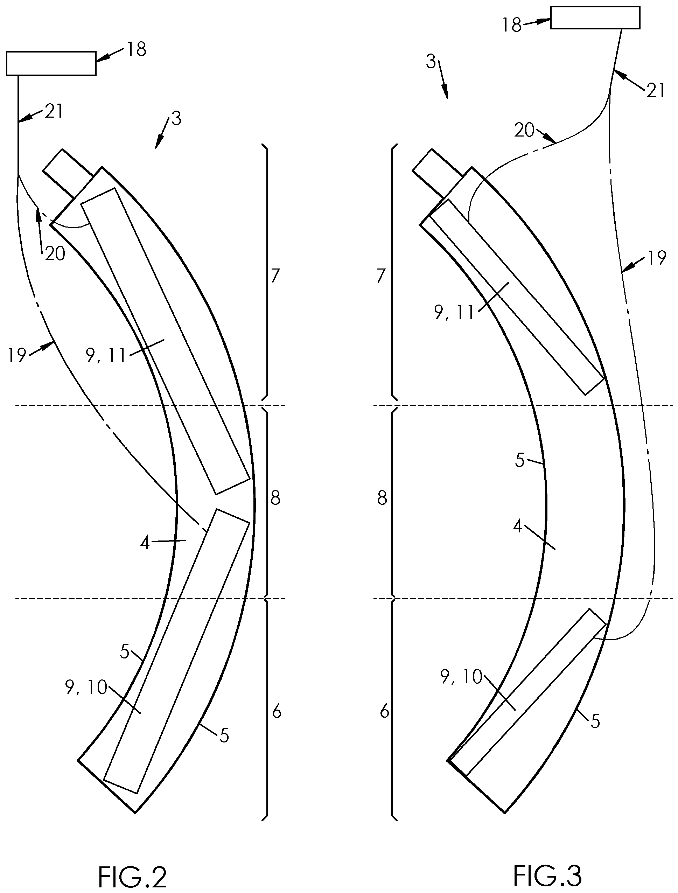

Le réservoir 3, visible en coupe sur les figures 2 et 3, comprend :
- une enceinte 4 close en forme d'arc de cercle, délimitée par des parois 5, dans laquelle est reçue l'huile, l'enceinte ayant une portion 6 inférieure et une portion 7 supérieure distantes l'une de l'autre et séparées par une portion 8 milieu, et
- un dispositif 9 de contrôle du niveau d'huile dans l'enceinte 4.

Avantageusement, la portion 6 inférieure et la portion 7 supérieure représentent chacune un tiers de la longueur courbe totale de l'enceinte 4.

Comme représenté aux figures 2 et 3, le dispositif 9 de contrôle comprend un premier capteur 10 positionné dans la portion 6 inférieure pour y contrôler le niveau d'huile, et un second capteur 11 séparé du premier capteur 10 et positionné dans la portion 7 supérieure de l'enceinte 4 pour y contrôler le niveau d'huile.

De préférence, les capteurs 10, 11 sont des capteurs rectilignes, plus simples de fabrication que des capteurs courbes, notamment en termes de précision de fabrication.

Selon un premier mode de réalisation, représenté à la figure 2, les deux capteurs 10, 11 ont respectivement une longueur supérieure à la hauteur de la portion 6 inférieure et de la portion 7 supérieure du réservoir 3. Dans ce mode de réalisation, le premier capteur 10 est positionné de sorte à couvrir la portion 6 inférieure et une partie de la portion 8 milieu, et le second capteur 11 est positionné de sorte à couvrir la portion 7 supérieure et une partie de la portion 8 milieu.

Avantageusement, les deux capteurs 10, 11 ont une longueur sensiblement égale à la moitié de la longueur courbe totale de l'enceinte 4. Ainsi, il est possible de contrôler le niveau d'huile en tout point du réservoir 3. Nous précisons toutefois, que les figures 2 et 3 sont schématiques et ne représentent pas les portions 6, 7, 8 inférieure, supérieure et milieu à échelle réelle.

Selon un second mode de réalisation représenté à la figure 3, les deux capteurs 10, 11 ont respectivement une longueur inférieure à la hauteur de la portion 6 inférieure et de la portion 7 supérieure du réservoir 3. Dans ce mode de réalisation le premier capteur 10 ne permet alors que de surveiller le niveau d'huile dans la portion 6 inférieure du réservoir et le second capteur 11 ne permet alors que de contrôler le niveau d'huile dans la portion 7 supérieure du réservoir 3.

Avantageusement, les deux capteurs 10, 11 ont une longueur légèrement inférieure à la hauteur des portions 6, 7 inférieure et supérieure, c'est-à-dire légèrement inférieure au tiers de la longueur courbe totale de l'enceinte 4.

La fixation du premier capteur 10 dans le réservoir peut être assurée soit de manière définitive, auquel cas il ne sera pas possible de changer le premier capteur 10 en cas de défaillance (il faudra alors remplacer l'ensemble du réservoir 3), soit de manière amovible.

Dans le cas d'une fixation amovible, le réservoir comprend, sur l'une de ses parois, un bouchon 12 d'étanchéité. Le premier capteur 10 peut alors être inséré et retiré dans ou de l'enceinte 4 par une ouverture 13 de la paroi 5 qui sera bouchée par le bouchon 12 d'étanchéité une fois en place sur la paroi 5.

Selon une première variante, le premier capteur 10 peut être maintenu dans l'enceinte 4 par des butées (non représentées).

Selon une seconde variante, le capteur peut être solidaire du bouchon 12 d'étanchéité, comme représenté sur la figure 4.

Lorsque le premier capteur 10 est fixé de manière amovible, il est nécessaire de vidanger le réservoir (c'est-à-dire d'en retirer une certaine quantité d'huile) jusqu'à un niveau situé en dessous du bouchon 12 d'étanchéité de sorte que lors de l'ouverture du bouchon 12 d'étanchéité, de l'huile ne s'écoule pas du réservoir par l'ouverture 13.

La fixation du second capteur 11 dans le réservoir 3 peut être réalisée de manière connue, c'est-à-dire par une trappe d'accès (non représentée) le second capteur 11 pouvant alors être amovible.

La figure 5 représente de manière schématique un type particulier de capteur correspondant aux capteurs 10, 11 utilisés pour contrôler le niveau d'huile dans le réservoir 3. Ce capteur comprend un flotteur 14 qui suit le niveau d'huile en étant guidé par des rails 15 et comprend un élément magnétique. Face au flotteur 14 est disposée une carte 16 électromagnétique portant des contacteurs 17 qui interagissent avec l'élément magnétique du flotteur 14.

Lorsque le niveau dans le réservoir évolue, le flotteur 14 se déplace le long de la carte 16 électromagnétique et l'élément magnétique agit avec les contacteurs 17. Les contacteurs 17 passent alors d'une position ouverte à une position fermée, ou inversement, et un signal électrique circule dans la carte 16 électromagnétique et est transmis à une unité 18 d'acquisition, distante du réservoir 3, qui transforme ce signal électrique en une information lisible par un pilote ou un mécanicien.

La transmission du signal électrique est assurée par un harnais 19 électrique associée au premier capteur 10 et un harnais 20 électrique associée au second capteur 11. Avantageusement, les deux harnais 19, 20 électriques peuvent se rejoindre dans une gaine 21.

Ainsi, lorsqu'il y a un trop plein d'huile dans le réservoir 3, le flotteur 14 du second capteur 11 est dans une position haute et le signal électrique envoyé à l'unité 18 d'acquisition est transformé en un signal d'alerte pour le pilote ou le mécanicien pour qu'une intervention soit effectuée sur le réservoir 3 et que le trop plein d'huile soit retiré.

Lorsqu'il y a un manque d'huile dans le réservoir 3, le flotteur 14 du premier capteur 10 est dans une position basse et le signal électrique envoyé à l'unité 18 d'acquisition est transformé en un signal d'alerte pour le pilote ou le mécanicien pour qu'une intervention soit effectuée sur le réservoir 3 et que de l'huile soit ajoutée dans le réservoir 3.

Lorsque le niveau d'huile dans le réservoir 3 est à un niveau correct, le flotteur 14 du premier capteur 10 est dans une position haute et le flotteur 14 du second capteur 11 est dans une position intermédiaire ou dans une position basse (dans tous les cas, dans une position écartée de sa position haute).

Le réservoir 3 qui vient d'être décrit présente certains avantages tels que :
- un gain de masse du réservoir 3, en ce que deux capteurs de petites dimensions peuvent être utilisés en remplacement d'un unique capteur de grandes dimensions ;
- une maintenance aisée, en ce que l'accès au premier capteur 10 se fait par l'ouverture 13 et le bouchon 12 d'étanchéité, ou encore
- un contrôle au plus juste de la quantité d'huile dans le réservoir 3, en ce qu'il n'est pas toujours utile de connaitre la quantité d'huile dans la portion 8 milieu du réservoir 3 puisque seuls le manque d'huile (dans la portion 6 inférieure) et le trop plein (dans la portion 7 supérieure) sont critiques.

## Revendications

1. Turbomachine comportant un réservoir (3) d'huile pour turbomachine (1) et une unité d'acquisition (18) distante du réservoir, le réservoir d'huile comprenant :
- une enceinte (4) close en forme d'arc de cercle apte à recevoir l'huile, l'enceinte (4) ayant une portion (6) inférieure et une portion (7) supérieure distantes l'une de l'autre, et
- un dispositif (9) de contrôle du niveau d'huile dans l'enceinte (4), **caractérisé en ce que** le dispositif (9) de contrôle comprend un premier capteur (10), **caractérisé en ce que** le premier capteur est positionné dans la portion (6) inférieure de l'enceinte (4) pour y contrôler le niveau d'huile, le dispositif comportant un second capteur (11) séparé du premier capteur (10) et positionné dans la portion (7) supérieure de l'enceinte (4) pour y contrôler le niveau d'huile,
le premier capteur (10) comprenant
- un premier élément magnétique,
- un premier flotteur (14) attaché au premier élément magnétique,
- des premiers rails (15) configurés pour guider le premier flotteur (14),
- une première carte électromagnétique (16) disposée face au premier flotteur (14) et comprenant des premiers contacteurs (17) configurés pour passer d'une position ouverte à une position fermée en fonction de la position du premier élément magnétique,
- un premier harnais électrique (19) assurant la transmission du signal électrique de la première carte électromagnétique (19) à l'unité d'acquisition (18),
le second capteur (11) comprenant
- un second élément magnétique,
- un second flotteur (14) attaché au second élément magnétique,
- des seconds rails configurés pour guider le second flotteur (14),
- une deuxième carte électromagnétique (16) disposée face au second flotteur (14) et comprenant des seconds contacteurs (17) configurés pour passer d'une position ouverte à une position fermée en fonction de la position du second élément magnétique,
- un second harnais électrique (20) assurant la transmission du signal électrique de la seconde carte électromagnétique (16) à l'unité d'acquisition (18).

2. Turbomachine selon la revendication 1, dans laquelle l'enceinte (4) comprend une portion (8) milieu séparant la portion (6) inférieure de la portion (7) supérieure, et dans laquelle le premier capteur (10) est positionné de sorte à couvrir la portion (6) inférieure et une partie de la portion (8) milieu, et le second capteur (11) est positionné de sorte à couvrir la portion (7) supérieure et une partie de la portion (8) milieu.

3. Turbomachine selon l'une quelconque des revendications précédentes, dans laquelle l'enceinte (4) comprend un bouchon (12) d'étanchéité permettant l'introduction ou le retrait du premier capteur (10).

4. Turbomachine selon la revendication précédente, dans laquelle le premier capteur (10) est solidaire du bouchon (12) d'étanchéité.

5. Turbomachine selon l'une quelconque des revendications précédentes, dans laquelle le premier capteur (10) et le second capteur (11) sont rectilignes.

6. Turbomachine selon l'une quelconque des revendications précédentes, dans laquelle la portion (7) supérieure et la portion (6) inférieure représentent chacune un tiers de la longueur courbe totale de l'enceinte (4).

## Patentansprüche

1. Turbomaschine mit einem Öltank (3) für Turbomaschinen (1) und einer vom Tank beabstandeten Erfassungseinheit (18), wobei der Öltank enthält:
- ein geschlossenes, kreisbogenförmiges Gehäuse (4), das zur Aufnahme von Öl geeignet ist, wobei das Gehäuse (4) einen unteren Abschnitt (6) und einen oberen Abschnitt (7) aufweist, die voneinander beabstandet sind, und
- eine Vorrichtung (9) zur Kontrolle des Ölstands im Gehäuse (4),
**dadurch gekennzeichnet, dass**
die Kontrollvorrichtung (9) einen ersten Sensor (10) umfasst,
**dadurch gekennzeichnet, dass** der erste Sensor im unteren Abschnitt (6) des Gehäuses (4) positioniert ist, um den Ölstand darin zu kontrollieren, wobei die Vorrichtung einen zweiten Sensor (11) umfasst, der vom ersten Sensor (10) getrennt ist und im oberen Abschnitt (7) des Gehäuses (4) positioniert ist, um den Ölstand darin zu kontrollieren,
wobei der erste Sensor (10) enthält:
- ein erstes magnetisches Element,
- einen ersten Schwimmer (14), der am ersten magnetischen Element befestigt ist,
- erste Schienen (15), die dazu ausgelegt ist, den ersten Schwimmer (14) zu führen,
- eine dem ersten Schwimmer (14) zugewandt angeordnete erste elektromagnetische Karte (16) mit ersten Kontaktgebern (17), die dazu ausgelegt sind, in Abhängigkeit von der Position des ersten magnetischen Elements von einer offenen Position in eine geschlossene Position zu schalten,
- einen ersten Leitungsstrang (19), der die Übertragung des elektrischen Signals von der ersten elektromagnetischen Karte (16) an die Erfassungseinheit (18) sicherstellt,
wobei der zweite Sensor (11) enthält:
- ein zweites magnetisches Element,
- einen zweiten Schwimmer (14), der an dem zweiten magnetischen Element befestigt ist,
- zweite Schienen, die dazu ausgelegt sind, den zweiten Schwimmer (14) zu führen,
- eine dem zweiten Schwimmer (14) zugewandt angeordnete zweite elektromagnetische Karte (16) mit zweiten Kontaktgebern (17), die dazu ausgelegt sind, in Abhängigkeit von der Position des zweiten magnetischen Elements von einer offenen Position in eine geschlossene Position zu schalten,
- einen zweiten Leitungsstrang (20), der die Übertragung des elektrischen Signals von der zweiten elektromagnetischen Karte (16) an die Erfassungseinheit (18) sicherstellt.

2. Turbomaschine nach Anspruch 1, wobei
das Gehäuse (4) einen Mittelabschnitt (8) enthält, der den unteren Abschnitt (6) vom oberen Abschnitt (7) trennt, und wobei
der erste Sensor (10) so positioniert ist, dass er den unteren Abschnitt (6) und einen Teil des Mittelabschnitts (8) bedeckt, und der zweite Sensor (11) so positioniert ist, dass er den oberen Abschnitt (7) und einen Teil des Mittelabschnitts (8) bedeckt.

3. Turbomaschine nach einem der vorangehenden Ansprüche, wobei
das Gehäuse (4) einen Verschlussstopfen enthält, der das Einsetzen bzw. Entfernen des ersten Sensors (10) gestattet.

4. Turbomaschine nach dem vorangehenden Anspruch, wobei
der erste Sensor (10) fest mit dem Verschlussstopfen (12) verbunden ist.

5. Turbomaschine nach einem der vorangehenden Ansprüche, wobei
der erste Sensor (10) und der zweite Sensor (11) geradlinig sind.

6. Turbomaschine nach einem der vorangehenden Ansprüche, wobei
der obere Abschnitt (7) und der untere Abschnitt (6) jeweils ein Drittel der gesamten Krümmungslänge des Gehäuses (4) ausmachen.

## Claims

1. Turbine engine comprising an oil tank (3) for turbine engine (1) and an acquisition unit (18) distant from the tank, the oil tank comprising:
- a closed enclosure (4) having the shape of an arc of circle adapted to receive oil, with the enclosure (4) having a lower portion (6) and an upper portion (7) at a distance from each other, and
- an oil level control device (9) in the enclosure (4),
**characterized in that** the control device (9) comprises a first sensor (10) **characterized in that** the first sensor (10) is positioned in the lower portion (6) of the enclosure (4) so as to control the oil level therein, the device comprising a second sensor (11) separate from the first sensor (10) and positioned in the upper portion (7) of the enclosure (4) so as to control the oil level therein,
the first sensor (10) comprising:
- a first magnetic element,
- a first float (14) attached to the first magnetic element,
- first rails (15) configured to guide the first float (14),
- a first electromagnetic card (16) disposed facing the first float (14) and comprising first contactors (17) configured to switch from an open position to a closed position depending on a position of the first magnetic element,
- a first electrical lead (19) for transmitting the electrical signal from the first electromagnetic card (19) to the acquisition unit (18),
the second sensor (11) comprising:
- a second magnetic element,
- a second float (14) attached to the second magnetic element,
- second rails (15) configured to guide the second float (14),
- a second electromagnetic card (16) disposed facing the second float (14) and comprising second contactors (17) configured to switch from an open position to a closed position depending on a position of the second magnetic element,
- a second electrical lead (20) for transmitting the electrical signal from the second electromagnetic card (16) to the acquisition unit (18).

2. Turbine engine according to claim 1, wherein the enclosure (4) comprises a middle portion (8) separating the lower portion (6) from the upper portion (7), and wherein the first sensor (10) is so positioned as to cover the lower portion (6) and a part of the middle portion (8), and the second sensor (11) is so positioned as to cover the upper portion (7) and a part of the middle portion (8).

3. Turbine engine according to any one of the preceding claims, wherein the enclosure (4) comprises a sealing plug (12) enabling the introduction or the removal of the first sensor (10).

4. Turbine engine according to the preceding claim, wherein the first sensor (10) is integral with the sealing plug (12).

5. Turbine engine according to any one of the preceding claims, wherein the first sensor (10) and the second sensor (11) are straight.

6. Turbine engine according to any one of the preceding claims, wherein the upper portion (7) and the lower portion (6) each represent one third of the total curved length of the enclosure (4).
